# EUROPÄISCHE PATENTSCHRIFT

(11) **EP 1 640 800 B1**
(45) Veröffentlichungstag und Bekanntmachung des Hinweises auf die Patenterteilung: **20.08.2008**
(21) Anmeldenummer: 04104602.0
(22) Anmeldetag: 22.09.2004
(51) Int. Cl.: G03B 42/02, G03B 42/04, H04N 1/00

(54) **Vorrichtung zum Auslesen von in einer Speicherleuchtstoffplatte gespeicherten Röntgeninformation**
Device for reading x-ray information stored in a storage phosphor plate
Dispositif de lecture d'information radiographique stockée dans une plaque à mémoire luminescente

(43) Veröffentlichungstag der Anmeldung: 29.03.2006
(73) Patentinhaber: Agfa-Gevaert HealthCare GmbH, 51373 Leverkusen (DE)
(72) Erfinder: Auer, Franz, 84056, Rottenburg (DE); Schwelle, Peter, 82362, Weilheim (DE); Hölzl, Johannes, 85630, Neukeferloh (DE); Werkstetter, Rudolf, 84567, Perach (DE); Ihm, Werner, 84424 Isen (DE)

(56) Entgegenhaltungen:
- EP-A- 1 209 517
- EP-A- 1 324 117
- US-A- 4 201 919
- PATENT ABSTRACTS OF JAPAN Bd. 1999, Nr. 11, 30. September 1999 (1999-09-30) -& JP 11 160821 A (KONICA CORP), 18. Juni 1999 (1999-06-18)
- PATENT ABSTRACTS OF JAPAN Bd. 2000, Nr. 12, 3. Januar 2001 (2001-01-03) -& JP 2000 267209 A (KONICA CORP), 29. September 2000 (2000-09-29)

## Beschreibung

Die Erfindung betrifft eine Vorrichtung zum Auslesen von in einer Speicherleuchtstoffplatte gespeicherten Röntgeninformationen gemäß dem Oberbegriff von Anspruch 1.

Gattungsgemäße Vorrichtungen im Verfahren werden, insbesondere für medizinische Zwecke, im Bereich der Computer-Radiographie (CR) eingesetzt. Hierbei werden Röntgenaufnahmen in sogenannten Speicherleuchtstoffen aufgezeichnet, indem die durch ein Objekt, beispielsweise einen Patienten, hindurchtretende Röntgenstrahlung als latentes Bild in einer Speicherleuchtstoffschicht gespeichert wird. Zum Auslesen des gespeicherten Bildes wird die Speicherleuchtstoffschicht mit Stimulationslicht bestrahlt und dabei zur Aussendung von Emissionslicht angeregt, dessen Intensität von der jeweils gespeicherten Bildinformation abhängt. Das Emissionslicht wird von einem optischen Detektor erfasst und in elektrische Signale umgewandelt, welche nach Bedarf weiter verarbeitet und auf einem Monitor dargestellt oder an einem entsprechenden Ausgabegerät, wie z.B. einem Drucker, ausgegeben werden können.

Das Patent US 6,437,359 beschreibt eine gattungsgemäße Vorrichtung, in welche eine Kassette mit einer sich darin befindlichen Speicheneuchtstoffptatte eingegebenen werden kann. Um den Einfall von Umgebungslicht in das Innere der Vorrichtung zu verhindern, ist ein entsprechender Verschlussmechanismus im Bereich der Rückseite der eingegebenen Kassette vorgesehen.

Bei dem bekannten Verschlussmechanismus ist jedoch nicht in allen Anwendungsfällen eine ausreichend zuverlässige Lichtabdichtung gewährleistet. Dies gilt insbesondere im Falle größerer Lagetoleranzen der eingegebenen Kassetten und bei unterschiedlichen Kassettenformaten.

Aus JP 11 160821 A ist eine Vorrichtung bekannt, bei welcher ein in Längsrichtung der Kassette hin verschiebbarer Verschluss einen Abschnitt der Eingabeöffnung verschließt. Eine zuverlässige Ausrichtung der Kassette ist hierbei nicht immer gewährleistet.

Es ist Aufgabe der Erfindung, eine Vorrichtung zum Auslesen von in einer Speicheneuchtstoffplatte gespeicherten Röntgeninformationen anzugeben, bei welcher, insbesondere bei unterschiedlichen Lagetoleranzen und Kassettenformaten, eine zuverlässige Lichtabdichtung und Ausrichtung bei gleichzeitig einfachem Verschlussmechanismus gewährleistet wird.

Diese Aufgabe wird gemäß Anspruch 1 dadurch gelöst, dass mindestens ein Verschluss vorgesehen ist, welcher in Längsrichtung einer länglichen oder schlitzförmigen Eingabeöffnung, durch welche hindurch die in der eingegebenen Kassette befindliche Speicherieuchtstoffplatte in das Innere der Vorrichtung transportiert werden kann, zur eingegebenen Kassette hin verschiebbar ist und dabei zumindest einen Abschnitt der Eingabeöffnung verschließt, so dass ein Eintreten von Umgebungslicht in das Innere der Vorrichtung reduziert oder verhindert wird.

Durch den erfindungsgemäß in Längsrichtung der Eingabeöffnung verschiebbaren Verschluss wird auf einfache Weise eine zuverlässige Lichtabdichtung des jeweiligen Abschnitts der Eingabeöffnung gewährleistet. Darüber hinaus wird eine einfache Anpassung des Verschlusses an zu verschließende Abschnitte der Eingabeöffnung mit jeweils unterschiedlicher Länge ermöglicht, wie z.B. bei unterschiedlichen Kassettenformaten oder unterschiedlichen Lagetoleranzen der eingegebenen Kassette.

Darüber hinaus ist ein in Längsrichtung der Eingabeöffnung verschiebbares Fixierelement zur Fixierung der Kassette in der Eingabeeinrichtung vorgesehen. Das Fixierelement ist z.B. als Keil oder Stift ausgebildet. Auf diese Weise wird - analog zur Lichtabdichtung - eine lage- und formatunabhängige Fixierung der Kassette in der Eingabeeinrichtung auf einfache und zuverlässige Weise gewährleistet.

Erfindungsgemäß weist das Fixierelement eine senkrecht zur Längsrichtung der Eingabeöffnung teilweise abgeschrägte oder keilartig verlaufende Form auf. Diese Form hat zur Folge, dass die Kassette durch das in Längsrichtung der Eingabeöffnung bewegliche Fixierelement mit einer ihrer Breitseiten gegen die Eingabeeinrichtung gedrückt wird. Hierdurch wird die Kassette bei ihrer Fixierung in der Eingabeeinrichtung gleichzeitig mit einer ihrer Breitseiten ausgerichtet.

In einer ersten bevorzugten Ausführungsform der Erfindung ist vorgesehen, dass eine Eingabeeinrichtung, in welche die Kassette mit der darin befindlichen Speicherleuchtstoffplatte eingegeben werden kann und die Eingabeöffnung, durch welche hindurch die in der eingegebenen Kassette befindliche Speicherleuchtstoffplatte in das Innere der Vorrichtung transportiert werden kann, so dimensioniert sind, dass Kassetten unterschiedlicher Größe in die Eingabeeinrichtung eingegeben bzw. Speicherieuchtstoffplatten unterschiedlicher Größe durch die Eingabeöffnung in das Innere der Vorrichtung transportiert werden können. Wird hierbei eine Kassette mit einem Format in die Eingabeeinrichtung eingegeben, welches kleiner ist als das größte Format, für welches die Eingabeeinrichtung und die Eingabeöffnung ausgelegt sind, so erlaubt der erfindungsgemäße Verschluss eine einfache und schnelle Anpassung des jeweils zu verschließenden Abschnitts der Eingabeöffnung an die jeweilige Kassettengröße.

In einer weiteren bevorzugten Ausführungsform ist vorgesehen, dass die Eingabeöffnung einen ersten Abschnitt aufweist, welcher durch die eingegebene Kassette verschlossen wird, und einen zweiten Abschnitt aufweist, welcher durch den Verschluss verschlossen wird. Die Kassette liegt vorzugsweise mit einer Schmalseite auf dem ersten Abschnitt der Eingabeöffnung auf und verschließt diesen dabei. Alternativ oder zusätzlich können auch geeignete Dichtungen, insbesondere Dichtlippen, vorgesehen sein, welche an den Breitseiten der Kassette anliegen und dadurch im Bereich der Kassette ein Eindringen von Umgebungslicht durch den ersten Abschnitt der Eingabeöffnung reduzieren bzw. verhindem. Insgesamt wird hierdurch eine zuverlässige Lichtabdichtung bei gleichzeitig einfacher Konstruktion erreicht

Im Sinne der Erfindung ist unter einem Verschließen des ersten bzw. zweiten Abschnitts der Eingabeöffnung ein Abdecken des jeweiligen Abschnitts zu verstehen, durch welches ein Eindringen von Umgebungslicht in das Innere der Vorrichtung reduziert oder verhindert wird. Insbesondere wird der erste und/oder zweite Abschnitt der Eingabeöffnung durch die eingegebene Kassette bzw. den Verschluss lichtdicht verschlossen.

In einer weiteren bevorzugten Ausgestaltung ist vorgesehen, dass der Verschluss durch eine mechanisch flexible Abdeckung gebildet wird. Hierdurch wird eine besonders einfache Beweglichkeit in Längsrichtung der länglichen Eingabeöffnung erreicht Als mechanisch flexible Abdeckung eignet sich beispielsweise ein flexibles Band oder Rollo aus einem für Umgebungslicht im Wesentlichen undurchlässigen Material, eine Jalousie oder ein Rollladen, weicher aus einzelnen, zueinander beweglichen und für Umgebungslicht im Wesentlichen undurchlässigen Segmenten zusammengesetzt ist.

In einer besonders bevorzugten Ausgestaltung ist vorgesehen, dass der Verschluss durch einen Teil eines in Längsrichtung der Eingabeöffnung verlaufenden Endlosriemens gebildet wird, welcher eine Aussparung aufweist. Der Endlosriemen läuft hierbei über zwei oder mehrere Rollen, wobei eine der Rollen als Antriebsrolle zum Antrieb des Endlosriemens ausgebildet ist. Die Laufrichtung des Endlosriemens im Bereich des Verschlusses ist im Wesentlichen parallel zur Längsrichtung der Eingabeöffnung. Die Aussparung im Endlosriemen ist so gewählt, dass die eingegebene Kassette nicht von dem beiderseits der Kassette verlaufenden Endlosriemen berührt wird. Insgesamt wird hierdurch eine besonders zuverlässige Lichtabdichtung bei gleichzeitig einfacher Mechanik erreicht.

Die Fixierung der Kassette in der Eingabeeinrichtung durch das Fixierelement kann hierbei durch Kraftschluss und/oder Formschluss erfolgen. Im einfachsten Fall einer kraftschlüssigen Fixierung drückt das Fixierelement mit einer bestimmten Kraft gegen die eingegebene Kassette und fixiert diese dadurch. Im Fall einer formschlüssigen Fixierung greift das Fixierelement beispielsweise in eine an der Kassette befindliche Vertiefung ein, wodurch die Kassette ebenfalls in ihrer Lage fixiert wird. Besonders vorteilhaft ist hierbei eine Kombination aus Form- und Kraftschluss.

In einer besonders bevorzugten Ausgestaltung ist vorgesehen, dass das Fixierelement mit dem Verschluss gekoppelt ist, so dass das Fixierelement und der Verschluss zusammen in Längsrichtung der Eingabeöffnung zur Kassette hin verschiebbar sind, wobei die Kassette fixiert und gleichzeitig ein Abschnitt, insbesondere der zweite Abschnitt, der Eingabeöffnung durch den Verschluss verschlossen wird. Hierdurch wird auf einfache Weise eine Fixierung der Kassette in der Eingabeeinrichtung bei gleichzeitiger Lichtabdichtung erreicht.

Vorteilhafterweise ist in der Eingabeeinrichtung ein Anschlag vorgesehen, an welchem die Kassette mit einer ihrer Schmalseiten anliegen kann. Der Anschlag verläuft hierbei vorzugsweise senkrecht zur Längsrichtung der Eingabeöffnung. Hierdurch kann die Kassette, insbesondere bei einer kraftschlüssigen Fixierung, durch eine Ausrichtung an dem Anschlag in eine definierte Position gebracht werden.

Der Anschlag weist vorzugsweise ein erstes Positionierelement auf, welches derart ausgestaltet und/oder angeordnet ist, dass es zu einem an der Kassette vorgesehenen zweiten Positionierelement komplementär ist. Insbesondere ist hierbei das erste Positionierelement als Vorsprung am Anschlag ausgeführt, welcher in das als Vertiefung in der Kassette ausgeführte zweite Positionierelement eingreifen kann. Eine exakte Ausrichtung der Kassette auf den Anschlag ist also nur dann möglich, wenn die Kassette eine bestimmte Orientierung hat, bei welcher das zweite Positionierelement zum ersten Positionierelement des Anschlags entsprechend positioniert ist.

Durch ein in der Eingabeeinrichtung vorgesehenes Tastelement, welches die Lage der Kassette in der Eingabeeinrichtung, insbesondere bezüglich des Anschlags, erfassen kann, können zusätzliche Informationen über die exakte Positionierung der Kassette in der Eingabeeinrichtung gewonnen werden. Vorzugsweise ist das Tastelement als Lineartaster ausgebildet, welcher ein elektrisches Signal liefert, dessen Höhe von der Entfernung der Kassette vom Anschlag abhängt.

Weitere Merkmale und Vorteile der Erfindung ergeben sich aus der folgenden Beschreibung bevorzugter Ausführungsformen und Anwendungsbeispiele, wobei Bezug auf die beigefügten Zeichnungen genommen wird.

Es zeigen:
- Fig. 1: a) eine stark schematisierte Darstellung der erfindungsgemäßen Vorrichtung zu einem ersten Zeitpunkt in Vorderansicht und b) in Seitenansicht;
- Fig. 2: a) die in Fig. 1 dargestellte Vorrichtung zu einem zweiten Zeitpunkt in Vorderansicht und b) in Seitenansicht;
- Fig. 3: einen Querschnitt durch die Eingabeeinrichtung im Bereich des Anschlags in Vorderansicht;
- Fig. 4: einen Querschnitt durch die Eingabeeinrichtung mit der darin befindlichen Kassette in Seitenansicht;
- Fig. 5: einen Querschnitt durch die Eingabeeinrichtung im Bereich des Fixierelements und des Verschlusses in Vorderansicht;
- Fig. 6: einen Querschnitt durch die Eingabeeinrichtung im Bereich des Fixierelements und des Verschlusses in Draufsicht;
- Fig. 7: eine bevorzugte Ausführungsform der Auflage;
- Fig. 8: a) bis c) eine weitere Ausführungsform der erfindungsgemäßen Vorrichtung in Seitenansicht zu einem ersten, zweiten bzw. dritten Zeitpunkt.

Die Erfindung wird anhand des nachfolgend beschriebenen Gesamtablaufs beim Auslesen von Speicherleuchtstoffplatten näher erläutert.

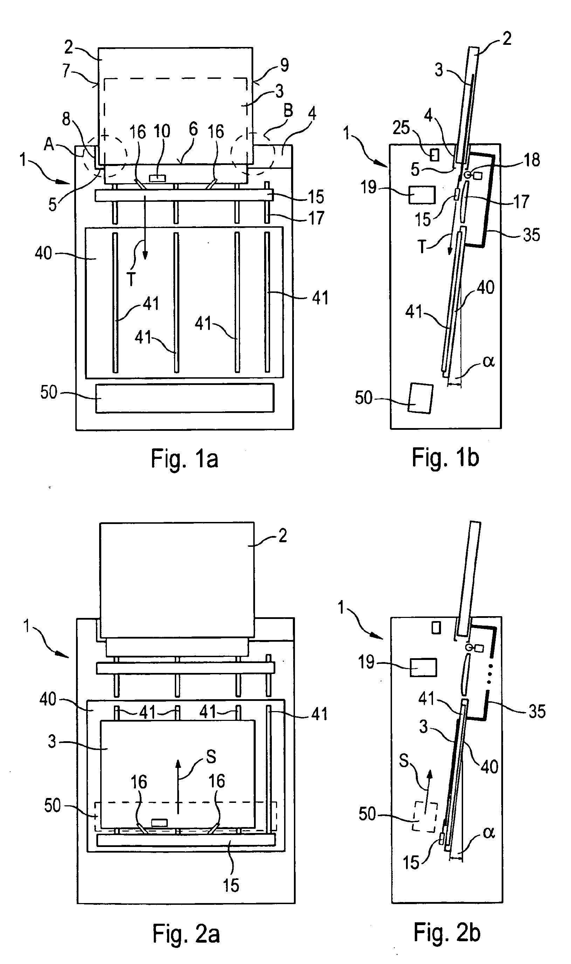

Die Figuren 1a und 1b zeigen ein Beispiel der erfindungsgemäßen Vorrichtung 1 in Vorder- bzw. Seitenansicht. Im oberen Bereich des Gehäuses der Vorrichtung 1 befindet sich eine Eingabeeinrichtung, welche in diesem Beispiel als Kassettenaufnahmeschacht 4 ausgebildet ist. Der Kassettenaufnahmeschacht 4 ist so ausgelegt, dass eine in den Schacht eingegebene Kassette 2 zusammen mit der darin befindlichen Speicherleuchtstoffplatte 3 um einen Neigungswinkel gegen die Vertikale geneigt ist. Der Neigungswinkel liegt vorzugsweise zwischen etwa 3° und 15°.

Im unteren Bereich des Kassettenaufnahmeschachts 4 ist eine längliche Eingabeöffnung 5 vorgesehen, durch welche die in der Kassette 2 befindliche Speicherleuchtstoffplatte 3 in das Innere des Gehäuses der Vorrichtung 1 transportiert werden kann. Die Eingabeöffnung 5 ist länglich oder schlitzförmig ausgebildet, wobei deren Länge mindestens so groß wie die entsprechende Länge des größten in der Vorrichtung 1 auszulesenden Speicherleuchtstoffplattenformats. Die Breite der Eingabeöffnung 5 ist ausreichend groß gewählt, damit die Speicherleuchtstoffplatte 3 bei der Entnahme aus der Kassette 2 auch bei kleineren Lageschwankungen nicht durch die Eingabeöffnung 5 behindert wird.

Die Kassette 2 liegt mit einer ersten Schmalseite 6 auf dem Boden des Kassettenaufnahmeschachts 4 auf und liegt mit einer zweiten Schmalseite 7 an einem Anschlag 8 an, welcher an einem Ende des Kassettenaufnahmeschachts 4 vorgesehen ist.

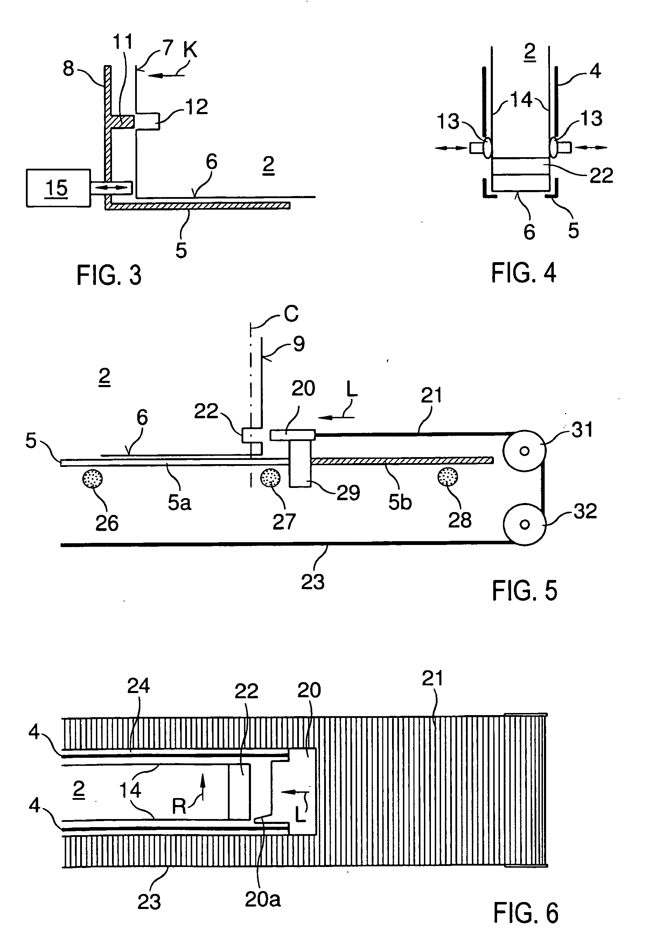

Der in Fig. 1a markierte Ausschnitt A ist in Fig. 3 vergrößert dargestellt. Am Anschlag 8 ist ein Vorsprung 11 vorgesehen, welcher in eine entsprechende, komplementäre Vertiefung 12 in der Kassette 2 eingreifen kann und diese dadurch im Kassettenaufnahmeschacht 4 fixieren kann. Während die Kassette 2 bei ihrer Eingabe in den Kassettenaufnahmeschacht 4 in Richtung K auf den Anschlag 8 geschoben wird und der Vorsprung 11 in die Vertiefung 12 der Kassette 2 eingreifen kann, wird gleichzeitig mit der unteren Ecke der Kassette 2 ein Lineartaster 15 betätigt, welcher ein der jeweiligen Position der Kassette 2 entsprechendes Signal liefert. Anhand dieses Signals kann festgestellt werden, ob die Kassette 2 bereits vollständig am Anschlag 8 anliegt.

Falls beispielsweise die Kassette 2 mit einer falschen Schmalseite in Richtung K auf den Anschlag 8 zu bewegt wird, kann der Vorsprung 11 des Anschlags 8 nicht in eine entsprechende Vertiefung der Kassette 2 eingreifen, so dass die Kassette 2 etwa auf der Höhe des Vorsprungs 11 zum Stehen kommt. In diesem Falle liefert der Lineartaster 15 kein entsprechend hohes Signal, so dass auf eine falsche Orientierung der eingegebenen Kassette 2 geschlossen werden kann. In diesem Fall wird in einer geeigneten Anzeigeeinheit an der Vorrichtung ein entsprechendes Fehlersignal ausgegeben.

Durch den Lineartaster 15 kann darüber hinaus die exakte Lage der Kassette 2 bezüglich des Anschlags 8 bzw. der Eingabeöffnung 5 überprüft werden. So kann der Lineartaster 15 auch eine leichte Verkippung der Kassette 2 gegenüber der Horizontalen erfassen.

Die Kombination des Vorsprungs 11 am Anschlag 8 und der entsprechenden Vertiefung 12 in der Kassette 2 einerseits mit dem Lineartaster 15 im Bereich des Anschlags 8 andererseits erlaubt somit auf einfache Weise eine zuverlässige Erkennung der richtigen Orientierung und exakten Lage einer eingegebenen Kassette 2. Erst wenn der Lineartaster 15 ein entsprechendes Signal liefert, werden weitere Prozessschritte bei der Bearbeitung der in der Kassette 2 befindlichen Speicherleuchtstoffplatte 3 ausgelöst.

In einem nächsten Schritt erfolgt die Fixierung der Kassette im Bereich der gegenüber der zweiten Schmalseite 7 liegenden dritten Schmalseite 9 der Kassette 2 in Verbindung mit einer Lichtabdichtung der Eingabeöffnung 5. Dies wird nachfolgend unter Bezugnahme auf die Figuren 4 bis 6 näher erläutert.

Fig. 5 zeigt den in Fig. 1a eingezeichneten Bereich B vergrößert. Ein an einem Endlosriemen 23 angebrachtes Fixierelement 20 wird in Längsrichtung L der Eingabeöffnung 5 zur dritten Schmalseite 9 der Kassette 2 hin bewegt und kann dort in eine weitere Vertiefung 22 der Kassette 2 eingreifen und die Kassette 2 dadurch formschlüssig fixieren. Durch eine entsprechende Andruckkraft wird gleichzeitig eine kraftschlüssige Fixierung der Kassette 2, insbesondere durch Andrücken an den auf der gegenüber liegenden zweiten Schmalseite 7 angeordneten Anschlag 8, erreicht.

Die Lichtabdichtung der Eingabeöffnung 5 erfolgt hierbei sowohl durch die erste Schmalseite 6 der Kassette 2, welche einen ersten Abschnitt 5a der Eingabeöffnung 5 gegen Lichteinfall abdeckt, und durch einen Verschluss 21, welcher durch einen Teil des Endlosriemens 23 gebildet wird und einen zweiten Abschnitt 5b der Eingabeöffnung 5 abdeckt.

Alternativ oder zusätzlich kann der erste Abschnitt 5a der Eingabeöffnung 5 durch andere geeignete Mittel gegen Lichteinfall abgedichtet werden. Eine mögliche Variante ist in Fig. 4 dargestellt, welche einen Querschnitt durch die Eingabeeinrichtung 4 mit der darin befindlichen Kassette 2 entlang der Querschnittsebene C (siehe Fig. 5) in Seitenansicht darstellt. In diesem Beispiel sind Dichtlippen 13 vorgesehen, welche seitlich in das Innere des Kassettenaufnahmeschachts 4 einfahren können und auf den Breitseiten 14 der Kassette 2 aufliegen können. Die Dichtlippen 13 sind in diesem Beispiel als Hohllippen ausgebildet und verlaufen vorzugsweise jeweils parallel zur Längsrichtung L (siehe Fig. 5) der Eingabeöffnung 5 bzw. der ersten Schmalseite 6 der Kassette 2.

In Fig. 4 ebenfalls zu erkennen ist die Vertiefung 22, in welche das Fixierelement 20 (siehe Fig. 5) eingreifen kann und dabei die Kassette 2 form- und ggf. kraftschlüssig fixieren kann.

Im Beispiel der Fig. 5 sind außerdem Lichtschranken 26 bis 28 vorgesehen, welche durch eine an dem Fixierelement 20 angebrachten Fahne 29 unterbrochen werden können. Die Lichtschranken 26 bis 28 sind hierbei entsprechend den unterschiedlichen zu verarbeitenden Kassettenformaten angeordnet, so dass eine Lichtschranke 26, 27 bzw. 28 nur dann von der Fahne 29 unterbrochen wird und ein entsprechendes Signal liefert, wenn eine für diese Vorrichtung zugelassene Kassette mit einem entsprechenden Format in exakter Lage und richtiger Orientierung eingegeben wird. In Verbindung mit dem im Zusammenhang mit Fig. 3 näher erläuterten Anschlag 8 wird durch die Lichtschranken 26, 27 bzw. 28 eine noch größere Zuverlässigkeit bei der Erkennung von richtiger Orientierung und exakter Lage der jeweils eingegebenen Kassette 2 gewährleistet.

Der Endlosriemen 23 ist vorzugsweise als Zahnriemen ausgebildet. Zur Führung und zum Antrieb des Endlosriemens 23 sind Rollen 31 und 32 vorgesehen, wobei eine der Rollen 31 bzw. 32 als Rollenantrieb ausgebildet ist, welcher den Endlosriemen 23 und damit den Verschluss 21 sowie das daran befestigte Fixierelement 20 parallel zur Längsrichtung L der Eingabeöffnung 5 bewegen kann.

Fig. 6 zeigt eine Draufsicht des in Fig. 5 dargestellten Ausschnitts der erfindungsgemäßen Vorrichtung. Wie zu erkennen ist, weist der Endlosriemen 23 eine Aussparung 24 im Bereich der eingegebenen Kassette 2 auf, damit dieser zu beiden Seiten der Kassette 2 verlaufen kann. An einem Ende der Aussparung 24 ist das Fixierelement 20 angebracht, welches zusammen mit dem sich daran anschließenden Verschluss 21 auf die Kassette 2 zu- bzw. von der Kassette 2 wegbewegt werden kann. Das Fixierelement 20 weist einen abgeschrägten oder keilartig verlaufenden Bereich 20a auf, durch welchen die Kassette 2 in Richtung R gegen eine Wand des Kassettenaufnahmeschachts 4 gedrückt wird, wenn das Fixierelement 20 in die Vertiefung 22 der Kassette 2 einfährt.

Das Fixierelement 20 ist vorzugsweise an einem Schlitten befestigt, der mit Rollen auf beiderseits der Kassette 2 verlaufenden Schienen verschiebbar gelagert ist (nicht dargestellt).

Am Rand der Speicherleuchtstoffplatte 3 (siehe Figur 1a) befindet sich ein elektronischer Speicher 10 zur Speicherung von Daten u. a. zum Format der Kassette 2, der Speicherleuchtstoffplatte 3 sowie der Gesamtdicke der Speicherleuchtstoffplatte 3, welche sich aus einem Substratmaterial und einer darauf befindlichen Speicherleuchtstoffschicht zusammensetzt und typischerweise eine Gesamtdicke zwischen etwa 1 und 3 mm aufweist.

Der elektronische Speicher 10 ist vorzugsweise als so genanntes RF-Tag ausgebildet, welches von einem RF-Leser 25 mittels Radiofrequenzstrahlung ausgelesen werden kann. Die aus dem elektronischen Speicher 10 ausgelesenen Daten zum Format der Kassette 2 können mit den von den Lichtschranken 26 bis 28 erhaltenen Informationen verglichen werden und auf Plausibilität geprüft werden. Befindet sich beispielsweise ein nicht erwünschter Gegenstand zwischen der dritten Schmalseite 9 der Kassette 2 und dem Fixierelement 20, wie z.B. eine Hand oder ein Finger einer Bedienperson, so ist das hierbei erhaltene Lichtschrankensignal nicht konsistent mit dem im elektronischen Speicher 10 festgelegten Kassettenformat. In diesem Falle kann der Fixiervorgang unterbrochen werden und ein entsprechendes Fehlersignal ausgegeben werden.

Am umlaufenden Endlosriemen 23 kann darüber hinaus ein sog. Klemmkraftsensor (nicht dargestellt) angeordnet sein, welcher die Spannung des Endlosriemens 23 beim Fixieren der Kassette 2 erfassen kann. Anhand der erfassten Riemenspannung kann der Antrieb des Endlosriemens 23 so gesteuert werden, dass das Fixierelement 20 mit einer vorgebbaren Kraft auf die dritte Schmalseite 9 der Kassette 2 drückt und diese dabei fixiert. Typische Kräfte liegen hierbei zwischen 10 und 100 N. Auf diese Weise wird auch bei Kassetten mit unterschiedlichem Format eine formatunabhängige Andruckkraft und Fixierung der Kassette im Kassettenaufnahmeschacht 4 erreicht. Durch eine entsprechende Vorgabe der Andruckkraft kann darüber hinaus gewährleistet werden, dass die Kassette 2 nicht durch zu hohe Kräfte bei deren Fixierung beschädigt wird. Darüber hinaus wird die Verletzungsgefahr in Fällen reduziert, in welchen versehentlich ein Körperteil, wie z.B. eine Hand oder ein Finger, einer Bedienperson zwischen Kassette 2 und Fixierelement 20 oder Anschlag 8 gerät.

An der ersten Schmalseite 6 der Kassette 2 ist eine Klappe (nicht dargestellt) vorgesehen, welche die Kassette 2 lichtdicht verschließt. Diese Klappe wird mit einem geeigneten Öffnungsmechanismus (nicht dargestellt) entriegelt, wobei gleichzeitig die Speicherleuchtstoffplatte 3 in der Kassette 2 verriegelt wird, damit diese nicht aus der Kassette 2 fallen kann. Eine solche Kassette mit einem entsprechenden Ent- bzw. Verriegelungsmechanismus wird in der europäischen Patentschrift mit der Veröffentlichungsnummer EP 1531359 näher beschrieben.

Vorzugsweise ist das Öffnen der Klappe, welches vorzugsweise durch eine einfache translatorische Bewegung von entsprechenden Öffnungsstiften im Bereich der ersten Schmalseite 6 der Kassette 2 erfolgt, mit der Abdichtung an den Breitseiten 14 der Kassette 2 durch die bereits weiter oben beschriebenen Dichtlippen 13 (siehe Fig. 4) mechanisch gekoppelt.

Eine Transporteinrichtung 15 kann nun an die Kassette 2 und die darin befindliche Speicherleuchtstoffplatte 3 heranfahren und letztere mittels Greifarmen 16 greifen. An der Speicherleuchtstoffplatte 3 sind hierbei geeignete Haken und/oder Aussparungen vorgesehen, wie sie insbesondere in den veröffentlichten europäischen Patentanmeldungen EP 1 321 804 und EP 1 324 118 näher beschrieben sind.

Die noch in der Kassette 2 verriegelte Speicherleuchtstoffplatte 3 kann nun entriegelt werden und durch eine Bewegung der Transporteinrichtung 15 in Transportrichtung T nach unten aus der Kassette 2 entnommen werden. Die Transportrichtung T schließt hierbei ebenfalls einen endlichen Neigungswinkel gegen die Vertikale ein und ist vorzugsweise so gewählt, dass die Speicherleuchtstoffplatte 3 im Wesentlichen ohne Richtungsänderung, d. h. in nur einer Transportebene, aus der Kassette entnommen und transportiert werden kann.

Die Speicherleuchtstoffplatte 3 wird nun in Transportrichtung T zu einer Auflage 40 transportiert. An der Auflage 40 sind Abstandsleisten 41 vorgesehen, welche während des Transportes der Speicherleuchtstoffplatte 3 über die Auflage 40 ausgefahren werden. Die Speicherleuchtstoffplatte 3 liegt dann aufgrund ihres Eigengewichts auf den Abstandsleisten 41 auf und wird durch diese reibungsarm geführt.

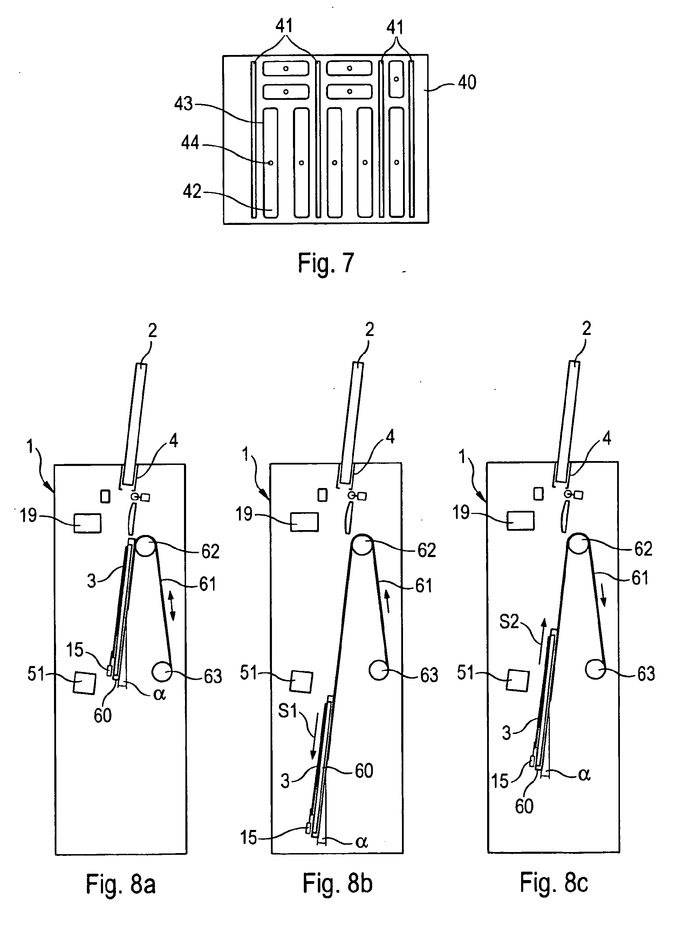

Der Aufbau einer derart ausgestalteten Auflage 40 ist in Fig. 7 im Detail dargestellt. Wie zu erkennen ist, weist die Auflage 40 neben den bereits erwähnten ein- und ausfahrbaren Abstandsleisten 41 mehrere Segmente 42 auf, durch welche die auf der Auflage 40 befindliche Speicherleuchtstoffplatte 3 an die Auflage 40 gezogen werden kann. In dem hier dargestellten Beispiel umfassen die einzelnen Segmente 42 jeweils eine Gummiumrandung 43 und eine innerhalb des jeweiligen Segments 42 angeordnete Saugdüse 44, welche mit einer Vakuumpumpe (nicht dargestellt) verbunden ist. Durch geeignete Anordnung unterschiedlich großer Segmente 42, deren Anziehungs- bzw. Ansaugwirkung vorzugsweise einzeln ansteuerbar ist, wird auf einfache Weise eine an das jeweilige Format der Speicherleuchtstoffplatte 3 adaptierbare Anziehung an die Auflage 40 realisiert.

Die Auflage 40 ist ebenfalls um einem Neigungswinkel α gegen die Vertikale geneigt.

Ist die Speicherleuchtstoffplatte 3 im Bereich der Auflage 40 angekommen, so kann Erstere aufgrund ihres Eigengewichts auf der Auflage 40 bzw. den ausgefahrenen Abstandsleisten 41 aufliegen, ohne dass weitere Führungs- oder Andrückelemente erforderlich wären. Die Abstandsleisten 41 können nun in die Auflage 40 eingefahren werden und die Speicherleuchtstoffplatte 3 nähert sich der Auflage 40 aufgrund ihres Eigengewichts weiter an und wird schließlich durch Einschalten des Vakuums an den entsprechenden Ansaugdüsen 44 der einzelnen Segmente 42 zusätzlich an die Auflage 40 angezogen.

Dieser Zustand ist in den Figuren 2a und 2b dargestellt. Bei diesem Ausführungsbeispiel ist die Transporteinrichtung 15 so konfiguriert, dass diese mit ihren Greifarmen 16 weiterhin die Speicherleuchtstoffplatte 3 hält, während diese bereits fest auf der Auflage 40 liegt. Hierdurch wird ein besonders sicherer Halt der Speicherleuchtstoffplatte 3 auf der Auflage 40 garantiert. Außerdem kann hierdurch ein erneuter Greifvorgang vor Beginn des Rücktransportes der Speicherleuchtstoffplatte 3 in die Kassette 2 unterbleiben.

Wenn die Speicherleuchtstoffplatte 3 fest auf der Auflage 40 aufliegt, fährt eine Ausleseeinrichtung 50 aus ihrer ursprünglichen Parkposition (siehe Fig. 1a und 1b) unterhalb des unteren Endes der Auflage 40 in Richtung S auf die Speicherleuchtstoffplatte 3 nach oben. Gleichzeitig wird durch einen entsprechenden, nicht dargestellten Abstandsmechanismus, ein entsprechender Abstand zwischen der Ausleseeinrichtung 50 und der Auflage 40 eingestellt, wobei der Abstand in Abhängigkeit von der aus dem elektronischen Speicher 10 ausgelesenen Gesamtdicke der Speicherleuchtstoffplatte 3 eingestellt wird.

Die Ausleseeinrichtung 50 kann nun die in der Speicherleuchtstoffplatte 3 gespeicherten Röntgeninformationen während ihrer Bewegung in Richtung S über die Speicherleuchtstoffplatte 3 Zeile für Zeile auslesen. Bei der Ausleseeinrichtung 50 handelt es sich vorzugsweise um einen so genannten Zeilenscanner, bei welchem jeweils eine ganze Zeile der Speicherleuchtstoffplatte 3 mit Stimulationslicht angeregt wird und das dabei erzeugte Emissionslicht durch einen zeilenförmigen, ortsauflösenden Detektor erfasst wird. Ein solcher Zeilenscanner wird beispielsweise in der deutschen Offenlegungsschrift DE 197 52 925 näher beschrieben.

Nach dem Auslesen der Speicherleuchtstoffplatte 3 wird der Abstand der Ausleseeinrichtung 50 zur Auflage 40 wieder erhöht und die Ausleseeinrichtung 50 fährt in ihre ursprüngliche Parkposition am unteren Ende der Auflage 40 zurück. Die Speicherleuchtstoffplatte 3 wird von der Auflage 40 freigegeben, indem in die jeweiligen Ansaugdüsen 44 der einzelnen Segmente 42 Luft eingelassen oder eingepumpt wird.

Vor Beginn des Rücktransports werden die Abstandsleisten 41 wieder aus der Auflage 40 ausgefahren. Die Speicherleuchtstoffplatte 3 kann nun durch die Transporteinrichtung 15 wieder zurück in die Kassette 2 transportiert werden.

Auf ihrem Rücktransport wird etwaige restliche Röntgeninformation in der Speicherleuchtstoffplatte 3 mittels einer im Bereich unterhalb des Kassettenaufnahmeschachtes 4 angeordneten Löschlampe 19 gelöscht.

Zwischen der Auflage 40 und dem Kassettenaufnahmeschacht 4 sind Führungselemente vorgesehen, welche, insbesondere während des Rücktransports, für eine zuverlässige Führung der Speicherleuchtstoffplatte 3 sorgen. Die Speicherleuchtstoffplatte 3 liegt hierbei aufgrund ihres Eigengewichts an den Führungselementen auf, welche im dargestellten Beispiel als Führungskufen 17 und Führungsrollen 18 ausgebildet sind.

Wenn die Speicherleuchtstoffplatte 3 wieder vollständig in der Kassette 2 eingefahren ist, kann diese wieder mit dem bereits weiter oben beschriebenen Verriegelungsmechanismus in der Kassette arretiert werden. Die Greifarme 16 der Transporteinrichtung 15 geben nun die Speicherleuchtstoffplatte 3 frei, und die Transporteinrichtung 15 fährt in ihre Parkposition zurück. Die Kassette 2 wird nun durch ein Zuklappen der oben beschriebenen Klappe verschlossen, die Dichtlippen 13 (siehe Fig. 4) werden von den Breitseiten 14 der Kassette 2 zurückgefahren und das Fixierelement 20 gibt zusammen mit dem daran befindlichen Verschluss 21 die Kassette 2 frei, welche nun von einer Bedienperson wieder aus dem Kassettenaufnahmeschacht 4 entnommen werden kann.

Vorzugsweise ist eine - in den Figuren 1b und 2b nur stark schematisiert angedeutete - Kopplungseinrichtung 35 vorgesehen, welche den Kassettenaufnahmeschacht 4 mit der Auflage 40 während des Transports der Speicherleuchtstoffplatte 3 mechanisch koppeln (siehe Fig. 1 b) und während des Auslesens der Speicherleuchtstoffplatte 3 mechanisch entkoppeln kann. Die mechanische Entkopplung wird zur Vereinfachung durch die in Fig. 2b gepunktete Linie der Kopplungseinrichtung 35 symbolisiert.

Hierdurch wird einerseits ein besonders sicherer Transport der Speicherleuchtstoffplatte 3 aus der Kassette auf die Auflage 40 gewährleistet, da sich die im Kassettenaufnahmeschacht 4 befindliche Kassette 2 und die Auflage 40 aufgrund der mechanischen Kopplung nicht relativ zueinander bewegen können.

Durch die mechanische Entkopplung der im Gehäuse der Vorrichtung 1 beweglich, z.B. über elastische Elemente, aufgehängten Auflage 40 wird darüber hinaus erreicht, dass Schwingungen des Gehäuses, insbesondere aufgrund von äußeren Stößen oder Erschütterungen, nicht oder nur geringfügig auf die Auflage 40 übertragen werden können. Hierdurch wird ein besonders sicheres und zuverlässiges Auslesen der Speicherleuchtstoffplatte 3 gewährleistet.

In einer alternativen Ausgestaltung der in den Figuren 1 und 2 dargestellten Vorrichtung wird die Speicherleuchtstoffplatte 3 ausgelesen, während diese von der Transporteinrichtung 15 und 16 in einer gegen die Vertikale geneigten Transportebene transportiert wird. Hierbei ist die Ausleseeinrichtung 50 so angeordnet (nicht dargestellt), dass die Speicherleuchtstoffplatte 3 an der Ausleseeinrichtung 50 vorbei transportiert und dabei von dieser ausgelesen werden kann, während die Speicherleuchtstoffplatte 3 von der Kassette 2 weg nach unten oder zur Kassette 2 hin nach oben transportiert wird. Die Ausleseeinrichtung 50 kann z.B. in der Nähe der in den Figuren 1 und 2 eingezeichneten Löscheinrichtung 19 angeordnet sein, so dass die Speicherleuchtstoffplatte 3 bei ihrer Entnahme aus der Kassette 2 ausgelesen und bei ihrem Rücktransport in die Kassette 2 gelöscht werden kann.

In den Fig. 8a, 8b und 8c ist eine alternative Ausführungsform der erfindungsgemäßen Vorrichtung jeweils in Seitenansicht dargestellt. Die Fixierung der Kassette 2 im Kassettenaufnahmeschacht 4 sowie die Entnahme der Speicherleuchtstoffplatte 3 aus der Kassette 2 mittels Transporteinrichtung 15 erfolgen entsprechend den obigen Ausführungen im Zusammenhang mit den Fig. 1 bis 6.

Im Unterschied zu den oben beschriebenen Ausführungsbeispielen ist die Auflage 60, auf welcher sich die Speicherleuchtstoffplatte 3 während des Auslesens befindet, nicht ortsfest, sondern wird mittels einer geeigneten Antriebseinrichtung an der ortsfest angeordneten Ausleseeinrichtung 51 vorbei transportiert. Die Antriebseinrichtung umfasst in den dargestellten Beispielen einen Seil- oder Bandzug 61, welcher an der Auflage 60 befestigt ist, über eine Umlenkrolle 62 umgelenkt und von einer Antriebsrolle 63 angetrieben wird.

Zu dem in Fig. 8a dargestellten Zeitpunkt liegt die Speicherleuchtstoffplatte 3 eben auf der Auflage 60 auf, welche um einen Neigungswinkel α gegen die Vertikale geneigt ist. Um einen sicheren Halt und eine beim Auslesen besonders vorteilhafte hohe Planität der Speicherleuchtstoffplatte 3 auf der Auflage 60 zu gewährleisten, ist die Auflage 60 mit geeigneten Anziehungseinrichtungen, wie z. B. Ansaugdüsen (wie in Fig. 7) oder Saugnäpfen, oder Halteeinrichtungen versehen. Darüber hinaus ist die Transporteinrichtung 15, mit welcher die Speicherleuchtstoffplatte 3 aus der Kassette 2 entnommen und zur Auflage 60 transportiert wird, weiterhin mit der Speicherleuchtstoffplatte 3 in Eingriff, wodurch letztere zusätzlich gehalten wird.

Durch Rotation der Antriebsrolle 63 kann nun die Speicherleuchtstoffplatte 3 zusammen mit der Auflage 60 in Richtung S1 abgesenkt werden. Ein Zeitpunkt während des Absenkens ist in Fig. 8b dargestellt. Dabei wird die Speicherleuchtstoffplatte 3 in Richtung S1 an der ortsfest angeordneten Ausleseeinrichtung 51 vorbei bewegt und kann von dieser ausgelesen werden.
Bei der Ausleseeinrichtung 51 kann es sich, wie im Falle der Ausleseeinrichtung 50 (Figuren 1 und 2), um einen so genannten Zeilenscanner handeln. Vorzugsweise ist die Ausleseeinrichtung 51 als so genannter Flying Spot-Scanner ausgeführt, bei welchem ein über einen rotierenden Spiegel abgelenkter Laserstrahl die Speicherleuchtstoffplatte punktweise anregt und das jeweils angeregte Emissionslicht mittels eines Photomultipliers erfasst wird.

In einer alternativen Ausgestaltung kann das Auslesen der Speicherleuchtstoffplatte 3 erst auf dem Rückweg erfolgen, während diese in Richtung S2 an der Ausleseeinrichtung 51 vorbei bewegt wird (siehe Fig. 8c). Je nach Ausgestaltung der Antriebseinrichtung 61 bis 63, insbesondere des verwendeten Antriebs der Antriebsrolle 63, kann hierdurch ein besonders zuverlässiger und schwankungsarmer Transport der Speicherleuchtstoffplatte 3 an der Ausleseeinrichtung 51 vorbei erfolgen.

Unabhängig von der jeweiligen Bewegungsrichtung S1 bzw. S2 ist die Speicherleuchtstoffplatte 3 während des Auslesens um den Neigungswinkel α gegen die Vertikale geneigt.

Nach dem Auslesen ist die Speicherleuchtstoffplatte 3 wieder in der Fig. 8a dargestellten Position angekommen und kann - analog zu den Beispielen der Figuren 1 und 2 - wieder durch die Transporteinrichtung 15 in die Kassette 2 zurücktransportiert werden. Dabei wird etwaige Restinformation in der Speicherleuchtstoffplatte 3 durch Einschalten der Löschlampe 19 gelöscht.

Die in den Figuren 8a, 8b und 8c beschriebene Antriebseinrichtung kann auch durch andere geeignete Antriebseinrichtungen ersetzt werden. Beispielsweise kann die Auflage 60 von einem sog. Spindelantrieb (nicht dargestellt) in einer gegen die Vertikale geneigten Ebene bewegt werden. Hierbei wird die Auflage 60 von einer oder mehreren von einem Motor angetriebenen rotierenden Wellen oder Spindeln, die parallel zur Auflage 60 angeordnet sind, in Bewegung versetzt.

## Patentansprüche

1. Vorrichtung zum Auslesen von in einer Speicherleuchtstoffplatte (3) gespeicherten Röntgeninformationen, umfassend
- eine Eingabeeinrichtung (4), in welche eine Kassette (2), in der sich eine Speicherleuchtstoffplatte (3) befindet, eingegeben werden kann,
- eine längliche Eingabeöffnung (5), durch welche hindurch die in der eingegebenen Kassette (2) befindliche Speicherleuchtstoffplatte (3) in das Innere der Vorrichtung (1) transportiert werden kann,
- mindestens einen Verschluss (21), welcher in Längsrichtung (L) der Eingabeöffnung (5) zur eingegebenen Kassette (2) hin verschiebbar ist und dabei zumindest einen Abschnitt (5b) der Eingabeöffnung (5) verschließt, und
- ein in Längsrichtung (L) der Eingabeöffnung (5) verschiebbares Fixierelement (20) zur Fixierung der Kassette (2) in der Eingabeeinrichtung (4),
**dadurch gekennzeichnet, dass**
das Fixierelement (20) eine senkrecht zur Längsrichtung (L) der Eingabeöffnung teilweise abgeschrägte oder keilartig verlaufende Form (20a) aufweist, so dass die Kassette (2) bei der Fixierung mit einer ihrer Breitseiten (14) gegen die Eingabeeinrichtung (4) gedrückt wird.

2. Vorrichtung nach Anspruch 1, **dadurch gekennzeichnet, dass** die Eingabeeinrichtung (4) und die Eingabeöffnung (5) so dimensioniert sind, dass Kassetten (2) unterschiedlicher Größe in die Eingabeeinrichtung (4) eingegeben bzw. Speicherleuchtstoffplatten (3) unterschiedlicher Größe durch die Eingabeöffnung (5) transportiert werden können.

3. Vorrichtung nach Anspruch 1 oder 2, **dadurch gekennzeichnet, dass** die Eingabeöffnung (5) einen ersten Abschnitt (5a) aufweist, welcher durch die eingegebene Kassette (2) verschließbar ist, und einen zweiten Abschnitt (5b) aufweist, welcher durch den Verschluss (21) verschließbar ist.

4. Vorrichtung nach Anspruch 3, **dadurch gekennzeichnet, dass** eine erste Schmalseite (6) der eingegebenen Kassette (2) auf dem ersten Abschnitt (5a) der Eingabeöffnung (5) aufliegen und dabei den ersten Abschnitt (5a) verschließen kann.

5. Vorrichtung nach Anspruch 3 oder 4, **dadurch gekennzeichnet, dass** der erste und/oder zweite Abschnitt (5a bzw. 5b) der Eingabeöffnung (5) durch die Kassette (2) bzw. den Verschluss (21) lichtdicht verschließbar ist.

6. Vorrichtung nach einem der vorangehenden Ansprüche, **dadurch gekennzeichnet, dass** der Verschluss (21) durch eine mechanisch flexible Abdeckung, insbesondere ein flexibles Band oder Rollo, eine Jalousie oder einen Rolliaden, gebildet wird.

7. Vorrichtung nach einem der vorangehenden Ansprüche, **dadurch gekennzeichnet, dass** der Verschluss (21) durch einen Teil eines in Längsrichtung (L) der Eingabeöffnung (5) verlaufenden Endlosriemens (23) gebildet wird, welcher eine Aussparung (24) aufweist.

8. Vorrichtung nach einem der vorangehenden Ansprüche, **dadurch gekennzeichnet dass** das Fixierelement (20) die Kassette (2) durch Kraftschluss und/oder Formschluss in der Eingabeeinrichtung (4) fixieren kann.

9. Vorrichtung nach Anspruch 3 oder 4, **dadurch gekennzeichnet, dass** das Fixieretement (20) mit dem Verschluss (21) gekoppelt ist, so dass das Fixierelement (20) und der Verschluss (21) zusammen in Längsrichtung (L) der Eingabeöffnung (5) zur Kassette (2) hin verschiebbar sind, wobei die Kassette (2) fixiert und gleichzeitig ein Abschnitt, insbesondere der zweite Abschnitt (5b), der Eingabeöffnung (5) durch den Verschluss (21) verschlossen wird.

10. Vorrichtung nach einem der vorangehenden Ansprüche, **dadurch gekennzeichnet, dass** die Eingabeeinrichtung (4) einen Anschlag (8) aufweist, an welchem die Kassette (2) mit einer ihrer Schmalseiten (7) anliegen kann.

11. Vorrichtung nach Anspruch 10, **dadurch gekennzeichnet, dass** der Anschlag (8) ein erstes Positionierelement (11) aufweist, welches derart ausgestaltet und/oder angeordnet ist, dass es zu einem an der Kassette (2) vorgesehenen zweiten Positionierelement (12) komplementär ist.

12. Vorrichtung nach Anspruch 11, **dadurch gekennzeichnet, dass** das erste Positionierelement (11) als Vorsprung am Anschlag (8) ausgeführt ist, wobei der Vorsprung des Anschlags (8) in das als Vertiefung in der Kassette (2) ausgeführte zweite Positionierelement (12) eingreifen kann.

13. Vorrichtung nach einem der vorangehenden Ansprüche, **dadurch gekennzeichnet, dass** die Eingabeeinrichtung (4) ein Tastelement (15) aufweist, welches die Lage der Kassette (2) in der Eingabeeinrichtung (4) erfassen kann.

## Claims

1. An apparatus for reading out X-ray information stored in a storage phosphor plate (3), comprising
- an input device (4) into which a cassette (2) in which a storage phosphor plate (3) is located can be input,
- an oblong input opening (5) through which the storage phosphor plate (3) located within the input cassette (2) can be conveyed to within the apparatus (1),
- at least one closure (21) which can be moved towards the input cassette (2) in the longitudinal direction (L) of the input opening (5), thus closing at least a section (5b) of the input opening (5), and
- a fixing element (20) moveable in the longitudinal direction (L) of the input opening (5) for fixing the cassette (2) in the input device (4),
**characterised in that**
the fixing element (20) has a partially slanted or wedge-shaped form (20a) extending perpendicularly to the longitudinal direction (L) of the input opening so that when fixed with one of its wide sides (14), the cassette (2) presses against the input device (4).

2. The apparatus according to Claim 1, **characterised in that** the input device(4) and the input opening (5) are of dimensions such that cassettes (2) of different sizes can be input into the input device (4) and storage phosphor plates (3) of different sizes can be conveyed through the input opening (5).

3. The apparatus according to Claim 1 or 2, **characterised in that** the input opening (5) has a first section (5a) which can be closed by the input cassette (2) and has a second section (5b) which can be closed by the closure (21).

4. The apparatus according to Claim 3, **characterised in that** a first narrow side (6) of the input cassette (2) can rest on the first section (5a) of the input opening (5) and can thus close the first section (5a).

5. The apparatus according to Claim 3 or 4, **characterised in that** the first and/or second section (5a or 5b) of the input opening (5) can be closed in a light-proof manner by the cassette (2) and the closure (21).

6. The apparatus according to any of the preceding claims, **characterised in that** the closure (21) is formed by a mechanically flexible cover, in particular a flexible strip or curtain, a shutter or a roller blind.

7. The apparatus according to any of the preceding claims, **characterised in that** the closure (21) is formed by part of an infinite belt (23) extending in the longitudinal direction (L) of the input opening (5) and which has a recess (24).

8. The apparatus according to any of the preceding claims, **characterised in that** the fixing element (20) can fix the cassette (2) in the input device (4) by force closure and/or form closure.

9. The apparatus according to Claim 3 or 4, **characterised in that** the fixing element (20) is coupled to the closure (21) so that the fixing element (20) and the closure (21) can be moved together towards the cassette (2) in the longitudinal direction (L) of the input opening (5), the cassette (2) being fixed, and at the same time a section, in particular the second section (5b), of the input opening (5) being closed by the closure (21).

10. The apparatus according to any of the preceding claims, **characterised in that** the input device (4) has a stop (8) against which the cassette (2) can rest with one of its narrow sides (7).

11. The apparatus according to Claim 10, **characterised in that** the stop (8) has a first positioning element (11) which is designed and/or disposed such that it is complementary to a second positioning element (12) provided on the cassette (2).

12. The apparatus according to Claim 11, **characterised in that** the first positioning element (11) is designed as a projection on the stop (8), the projection of the stop (8) being able to engage in the second positioning element (12) designed as an indentation in the cassette (2).

13. The apparatus according to any of the preceding claims, **characterised in that** the input unit (4) has a sensor element (15) which can detect the position of the cassette (2) within the input device (4).

## Revendications

1. Dispositif pour la lecture d'informations radiologiques stockées sur une plaque à mémoire au phosphore (3), comprenant
- un dispositif d'introduction (4) dans lequel peut être introduite une cassette (2) dans laquelle se trouve une plaque à mémoire au phosphore (3),
- une ouverture d'introduction allongée (5), à travers laquelle la plaque à mémoire au phosphore (3) se trouvant dans la cassette (2) introduite peut être transportée vers l'intérieur du dispositif (1),
- au moins une fermeture (21) qui est déplaçable dans la direction longitudinale (L) de l'ouverture d'introduction (5) vers la cassette (2) introduite et qui permet ainsi de fermer au moins une section (5b) de l'ouverture d'introduction (5), et
- un élément de fixation (20) déplaçable dans la direction longitudinale (L) de l'ouverture d'introduction (5) et destiné à la fixation de la cassette (2) dans le dispositif d'introduction (4),
**caractérisé en ce que**
l'élément de fixation (20) présente une forme (20a) partiellement biseautée ou en forme de coin qui se prolonge perpendiculairement à la direction longitudinale (L) de l'ouverture d'introduction, de sorte que la cassette (2) est pressée sur un de ses larges côtés (14) contre le dispositif d'introduction (4) lors de la fixation.

2. Dispositif selon la revendication 1, **caractérisé en ce que** le dispositif d'introduction (4) et l'ouverture d'introduction (5) sont de dimensions telles que des cassettes (2) de différentes tailles puissent être introduites dans le dispositif d'introduction (4) ou que des plaques à mémoire au phosphore (3) de différentes tailles puissent être transportées par l'ouverture d'introduction (5).

3. Dispositif selon la revendication 1 ou 2, **caractérisé en ce que** l'ouverture d'introduction (5) présente une première section (5a) qui peut être fermée au moyen de la cassette (2) introduite, et une deuxième section (5b) qui peut être fermée au moyen de la fermeture (21).

4. Dispositif selon la revendication 3, **caractérisé en ce qu'**un premier côté étroit (6) de la cassette (2) introduite peut reposer sur la première section (5a) de l'ouverture d'introduction (5) et ainsi fermer la première section (5a).

5. Dispositif selon la revendication 3 ou 4, **caractérisé en ce que** la première et/ou la deuxième section (5a ou 5b) de l'ouverture d'introduction (5) peuvent être fermées par la cassette (2) ou, le cas échéant, la fermeture (21) de manière étanche à la lumière.

6. Dispositif selon l'une des revendications précédentes, **caractérisé en ce que** la fermeture (21) est constituée par un dispositif de couverture à flexibilité mécanique, notamment une bande ou un store flexibles, une jalousie ou un volet roulant.

7. Dispositif selon l'une des revendications précédentes, **caractérisé en ce que** la fermeture (21) est constituée par une partie de courroie sans fin (23) présentant une découpe (24) et s'étendant dans la direction longitudinale (L) de l'ouverture d'introduction (5).

8. Dispositif selon l'une des revendications précédentes, **caractérisé en ce que** l'élément de fixation (20) peut fixer la cassette (2) par liaison de force et/ou de forme dans le dispositif d'introduction (4).

9. Dispositif selon la revendication 3 ou 4, **caractérisé en ce que** l'élément de fixation (20) est couplé à la fermeture (21) de sorte que l'élément de fixation (20) et la fermeture (21) soient déplaçables ensemble dans la direction longitudinale (L) de l'ouverture d'introduction (5) vers la cassette (2), la cassette (2) étant ainsi fixée et une section, notamment la deuxième section (5b), de l'ouverture d'introduction (5) étant simultanément fermée par la fermeture (21).

10. Dispositif selon l'une des revendications précédentes, **caractérisé en ce que** le dispositif d'introduction (4) présente une butée (8) sur laquelle la cassette (2) peut venir reposer sur un de ses côtés étroits (7).

11. Dispositif selon la revendication 10, **caractérisé en ce que** la butée (8) présente un premier élément de positionnement (11) qui est conçu et/ou agencé de telle sorte qu'il est complémentaire à un deuxième élément de positionnement (12) prévu sur la cassette (2).

12. Dispositif selon la revendication 11, **caractérisé en ce que** le premier élément de positionnement (11) est conçu sous la forme d'une saillie sur la butée (8), cette saillie de la butée (8) pouvant s'emboîter dans le deuxième élément de positionnement (12) constitué par un renfoncement dans la cassette (2).

13. Dispositif selon l'une des revendications précédentes, **caractérisé en ce que** le dispositif d'introduction (4) présente un élément de palpage (15) pouvant détecter la position de la cassette (2) dans le dispositif d'introduction (4).
